# EUROPEAN PATENT APPLICATION

(11) **EP 2 998 916 A1**
(43) Date of publication of application: **23.03.2016**
(21) Application number: 14185255.8
(22) Date of filing: 18.09.2014
(51) Int. Cl.: G06Q 20/20, G06Q 20/04, G06Q 20/34

(54) **Method and system for carrying out payment transactions**

(71) Applicant: Vodafone GmbH, 40549 Düsseldorf (DE)
(72) Inventor: Koraichi, Najib, 6333 CT Schimmert (NL); Bosch, Jos, 5231 LD Meerssen (NL); Schmidt, Ulrich Berndt Wilhem Hans Joachim, 44269 Dortmund (DE)
(74) Representative: Müller & Schubert

(57) **Abstract**

The present invention relates to a method of carrying out payment transaction with a payment card (10) including a secure element (100), the method comprising the steps of:
- initiating the payment transaction process via a data connection between the secure element (100) and a Point of Sale (PoS) terminal (11) by transmitting at least one identifier (PAN) for a first mode of payment transaction for the user to the Point of Sale (PoS) terminal (11);
- selecting a mode of payment transaction from at least two payment transaction modes by using the at least one identifier (PAN) received from the secure element (100), wherein one transaction mode is the first transaction mode for which the identifier (PAN) is stored at the secure element (100) and at least one transaction mode is a second transaction mode different from the mode for which the identifier is stored at the secure element (100); and
- directing the payment transaction request to one of at least two financial entities (14, 15) for finalizing the payment transaction based on the selected mode of payment transaction.

Also a system (1) for carrying out payment transactions is described.

## Description

Current debit advice procedure use customers bank account information (account number and bank code) read from customer's bank cards, which are used to trigger a direct debit by the merchant to the customer's bank account. Point of Sale (PoS) terminals are provided to the merchants, which process the debit advice against the customers bank account. In Germany, one of the most used payment mechanisms is ELV (elektronisches Lastschriftverfahren). For this there are solutions in use at a point of sale in a shop using data from a German debit card, for example giro card, to obtain the customer account number details electronically. In addition, smartcards are known, which provide debit and credit card services on a Subscriber Identity Module (SIM) to enable contactless payment.

One disadvantage of these known payment transactions methods is that they are limited to the services for which the card has been issued. In addition, with the new Standards of European Payment Regulation (SEPA) a mandate has to be granted from the user in order for a merchant or an acquirer employed by the merchant to be able to deduct an amount from the customer's bank account.

The problem to be solved by the present invention is thus to provide an easy and flexible, yet secure, solution for payment transactions, in particular contactless payment transactions.

The invention is based on the finding that this problem can be solved by using information provided in one mode of payment transaction for selecting and potentially initiating a different mode of payment transaction.

According to a first aspect of the invention, the problem is thus solved by a method of carrying out payment transaction with a payment card including a secure element. The method comprises the steps of:
- initiating the payment transaction process via a data connection between the secure element and a Point of Sale (POS) terminal by transmitting at least one identifier for a first mode of payment transaction for the user to the Point of Sale (PoS) terminal;
- selecting a mode of payment transaction from at least two payment transaction modes by using the at least one identifier received from the secure element, wherein one transaction mode is the first transaction mode for which the identifier is stored at the secure element and at least one transaction mode is a second transaction mode different from the mode for which the identifier is stored at the secure element; and
- directing a payment transaction request to one of at least two financial entities for finalizing the payment transaction based on the selected mode of payment transaction.

According to the present invention, carrying out a payment transaction refers to the steps necessary for an amount to change ownership. In particular, a payment transaction is considered performed or finalized according to the present invention, if the amount is deducted from an account of a user. This account may be a credit card account, debit card account or a bank account.

According to the present invention a payment card including a secure element is being used. The secure element may be, for example, a subscriber identity module (SIM) according to the GSM standard or a universal subscriber identity module (USIM) according to the UMTS standard. The secure element may alternatively or additionally be embedded in a device like a physical credit card or debit card. The secure element may be a Near Field Communication (NFC) chip, a magnetic strip or a micro SD card. Preferably a credit card or debit card functionality provisioned on a SIM to enable contactless payments, which is also referred to as a SmartPass service, is used as a secure element. In this case the SIM card represents a payment card according to the invention.

On the secure element, at least one identifier is stored. The identifier according to the present invention is an identifier for a mode of payment transaction for the specific user, who is also referred to as customer. The identifier therefore preferably at least includes user information which allows identification of the user. In addition the identifier preferably also includes account information of the user. The identifier is preferably the so called Primary Account Number (PAN) which may also be referred to as payment card number. In particular, the PAN may be a number according to ISO/IEC 7812.

The secure element or the payment card on which the secure element is provided or the payment card itself, can communicate with a Point of Sale (PoS) terminal via a data connection. The data connection may be via a contact of the secure element to the PoS terminal or preferably contactless. The data connection may thus be an NFC connection.

According to the present invention a PoS terminal denotes a terminal, which is associated with a merchant. The association may be direct or indirect. In particular, the PoS terminal may be operated by the merchant or by an acquirer who provides the service of operating the PoS terminal or of charging to the merchant. Hereinafter, explanations are made mainly with respect to merchants. The same explanations, however, apply to acquirers unless specified differently. In addition a PoS terminal may be a device provided at a store or may be an online payment device such as a card reader.

The transmission of the identifier from the secure element to the PoS terminal may be initiated by the PoS terminal, the secure element and/or may be triggered by the user of the secure element.

The method further comprises the selection of a mode of payment transaction from at least two payment transaction modes. The selection is performed by using the at least one identifier received from the secure element. The payment transaction modes from which one is selected comprise the first transaction mode for which the identifier is stored at the secure element. The transaction mode may be derivable from the identifier itself or from the request which is received at the PoS terminal. In addition, at least one transaction mode is a second transaction mode different from the mode for which the identifier is stored at the secure element.

The first and second payment transaction mode preferably differ from each other in that different financial entities are being used and/or in that different requirements for carrying out the payment transaction have to be fulfilled for the different payment transaction modes. Preferably, at least the mode of payment transaction which is different from the mode of payment transaction for which the identifier is stored on the secure element is a mode which requires an authorization for the transaction before the payment transaction can be initiated. This authorization which can also be referred to as a mandate is preferably made out for one counter party such as a merchant or acquirer and may be limited to one transaction or may be standing authorization.

By selecting a mode of payment transaction based on the identifier which has been received from the secure element, it is possible to select a mode of payment which is available and appropriate for the specific user. In addition, by using the identifier which is stored at the secure element for the first mode of payment transaction, it can be assured that at least the first payment transaction mode can be carried out.

In a further step, a payment transaction request according to the selected payment transaction mode is directed to one financial entity for finalizing the payment transaction based on the selected mode of payment transaction. The payment transaction request may be generated at the PoS terminal or at a handling unit of the system. According to the present invention, the payment transaction request is directed to a financial entity for finalizing the payment transaction. The directing of the request may include the generating of the request. In this case, the request will be generated according to the standards and requirements prescribed by the selected mode of payment transaction.

By analysing which mode of payment transaction is to be selected for a specific case, the flexibility of the method is increased. As the selection of the mode of transaction is performed by using an identifier which is assigned to a user for a specific mode of payment transaction and as this identifier is available even if the present invention is not to be used, the inventive method can be implemented in an easy way. In particular, no amendment to the secure element and preferably also not to the PoS terminal has to be made. Finally, by using an identifier which is stored on the secure element for a specific mode of payment transaction, the security of the method is increased over using the mere name of the user for selecting a mode of payment transaction.

According to a preferred embodiment of the invention, the selection of the transaction mode includes a look-up process for information stored in a database with respect to at least part of the identifier. Being stored with respect to the identifier means that the information is stored in combination with the identifier or at least that the information can be associated with the identifier. By carrying out the look-up only after the identifier has been received at the PoS terminal, databases which do not have to be present at or accessible by the payment card or secure element can be used. Thereby the security of the method is further increased and tampering with information and association between information and identifier can be avoided. The loop-up which is preformed for the selection preferably is the confirmation of presence of data for additional modes of payment transaction being registered or entered into the database. If such data for an additional mode is present, the actual decision may be performed in various different ways. In one example, the mode of payment transaction for which data is registered in the database for the user may automatically be used. However, also preferences of the user which may also be stored in the database may be used to select the mode to be used. In particular, a user preference on a mode of payment transaction may be considered when selecting the mode. Also in this case the availability of data for an additional mode of payment transaction for the user is first checked from the database.

As the look-up is performed with at least part of the identifier which had been received at the PoS terminal, in particular a PAN, a number of advantages can be achieved. On the one hand, the first mode of payment transaction which was to be triggered by the identifier can be carried out even if the look-up at the database is unsuccessful, that means even if no data for additional modes of payment transactions are available in the database. On the other hand no additional transmission of identification data from the payment card to the PoS, other then the identifier, is necessary in order to determine whether an additional mode of payment transaction exists.

According to one example an indication on priority of modes of transaction may also be stored in the database with respect to the identifier. In this case also the priority of usage of a mode of payment transaction may be part of the look-up process. Alternatively, the priority of mode of transaction may be defined at the PoS terminal or handling unit of the system. In this case, the priority may for example be pre-set by merchants or acquirers.

According to a preferred embodiment, in the look-up process also an indication of the PoS terminal is included. Including information into the look-up process means that the result of the look-up may be filtered by the additional indication or information related to that indication. Indication of the PoS terminal preferably includes information on the merchant or acquirer who uses the PoS terminal. The indication may thus be a merchant ID or an acquirer ID. By including this indication into the look-up process, it can be ensured that the mode to be selected is applicable to the merchant or acquirer in charge of the PoS terminal. In addition, attributes such as vouchers or loyalty cards issued by the merchant to the user may be identified during the look-up process. By including an indication of the PoS terminal which provides information on the merchant using the PoS terminal into the look-up process, mutual agreements between the user and the merchant such as an authorization of the user to the merchant or discounts granted by the merchant to the user can be identified in the look-up process and can be used for the further processing.

According to one embodiment, the selection of the payment transaction mode is carried out at the PoS terminal. In this case, the identifier which is transmitted to the PoS from the secure element may include identifications of applications for different modes of payment transaction (AID). Alternatively, the PoS may be connected to or may have access to a database to perform the above mentioned look-up process. In this case, if only one application for a mode of payment transaction is available or if only one mode of payment transaction is defined by the identifier received at the PoS, the PoS may immediately initiate the look-up for data on additional modes of payment transfer and/or other information such as priority on the database.

In addition or alternatively, the selection is carried out at a handling unit connected to the PoS terminal. Preferably, the handling unit is a unit which is located in the communication connection of the PoS terminal towards at least one financial entity which may be a credit card company or a bank. The handling unit may for example be an EMV node, in particular an EMV acquiring node. This node will hereinafter be referred to as an EMV node. With this embodiment, no changes need to be made to the PoS terminal. Instead, the PoS terminal may simply be used to transmit the identifier which it receives from the secure element in a request to the handling unit. As the handling unit is preferably located in a communication network to be able to communicate with financial entities, it is simple to connect this handling unit to a database. In addition, the security is further increased as the handling units will in general be out of reach to customers and third parties, whereas PoS terminals may be tampered with as customers can get in physical contact with the terminals.

According to one embodiment, the user provides confirmation on at least the second mode of payment transaction before the data connection to the PoS terminal is initiated.

The confirmation on the second mode of payment transaction preferably includes an indication of a merchant or acquirer. In particular, the confirmation is an authorization granted by the user to the merchant or acquirer and will hereinafter be referred to as authorization. As this authorization is granted before the data connection between the PoS terminal and the secure element is initiated and thus before the payment transaction process is initiated, the absence or presence of such an authorization can be considered in the selection of mode of payment transaction. In contrast, confirmations such as entering a PIN are only preformed after the data connection has been carried out. Such subsequent confirmations hence may delay the method, as the mode of payment transaction after having been initiated may not be authorized by the user and an alternative mode has to be selected.

According to a preferred embodiment, the first mode of payment transaction is a transaction according to the EMV standard and the second mode of payment transaction is an electronic debiting transaction ELV according to the SEPA standard. By this embodiment, it will be possible to use an EMV transaction to look-up and potentially initiate an ELV transaction.

EMV (Europay, MasterCard and VISA) standard or specifications describe chip usage for credit and debit cards for payment at PoS terminals. Single Euro Payments Area (SEPA) standard are standards describing electronic debiting orders ELV. SEPA transactions require a mandate to be granted by a user to a merchant. According to the present invention, the authorization or mandate may be an authorization for multiple transactions on request, for multiple transactions at fixed dates, for one transaction only. This single transaction may be a transaction which is initiated online or at a PoS terminal at a store.

According to one embodiment, the method comprises the steps of:
- receiving a primary account number for a first mode of payment transaction at the PoS as an identifier;
- triggering the payment transaction in the first mode towards a handling unit;
- looking-up transaction data for a second payment transaction mode by the handling unit in a data base;
- in case of presence of the transaction data for the second mode in the data base triggering a payment transaction according to the second payment transaction mode and aborting the payment transaction according to the first payment transaction mode; and;
in case of absence of the transaction data in the data base, continuing the payment transaction according to the first mode of payment transaction.

According to a further aspect the present invention relates to a system for carrying out payment transaction with a payment card including a secure element, comprising at least one PoS terminal and at least one handling unit for handling a payment transaction in a first mode of payment transaction. The system is characterized in that the system further comprises a selection module for selecting a mode of payment transaction from the first mode of payment transaction and at least one second mode of payment transaction, which is different to the first mode, and in that the selection module is associated to the handling unit of the system at which a requests for carrying out a payment transaction in one mode is received.

The system for carrying out payment transaction with a payment card including a secure element comprises at least one PoS terminal and at least one handling unit for handling a payment transaction with a first mode of payment transaction. The handling unit may be an EMV node which is interposed between a PoS terminal and a financial entity.

The selection module may be implemented as hardware and/or software. The selection module is associated to the handling unit of the system at which requests for carrying out a payment transaction in one mode are received. The selection module may at least partially be incorporated into the handling unit at which requests are received or it may be connected to such a unit. In the latter case, the unit is connected in such a way to the selection module that it can access the selection module. In particular a database of the selection module will be accessible from the handling unit. If the selection module is partially incorporated into the handling unit, preferably a database for looking up data for modes of payment transaction is connected to the handling unit and the selection module will trigger the look-up process and will perform the selection based on the look-up result.

According to a preferred embodiment, the selection module has an interface for at least receiving information from outside of the system and an interface for receiving information from at least one other unit of system. Information from outside of the system may be received from the user or from a different system, for example financial entities ore merchants. The selection module may also be referred to as backend module or as a selection unit. The interfaces for receiving information from outside of the system and from inside of the system may be combined or separate. According to a preferred embodiment, one interface is provided for receiving information from the user. In particular, the interface should allow entry of data into the selection module by the user and edition of data in the selection module by the user. By providing an interface or several interfaces at the selection module, via which information from within the system and from outside of the system may be received at the selection module, the flexibility is increased. In particular user preferences, authorizations such as mandates as well as merchant programs such as bonus programs may be considered. The interface for receiving information from within the system may for example be an interface to handling units such as EMV nodes. By providing such an interface, information, in particular look-up information such as a PAN and a merchant's ID may be provided to the selection system. In addition, look-up results such as transaction data, for example an IBAN, mandate number, or attributes such as vouchers and the like may be transmitted from the selection unit to the handling unit.

According to one embodiment, the selection module is connected to or integrated in a handling unit which is a communication node of the system for the first mode of payment transaction, in particular an EMV node. This embodiment has the advantages that on the one hand, a payment transaction request received at this node may be processed according to the first mode of payment transaction. This node will also have information necessary for completing the payment transaction request. In particular, details such as amount of money will be provided to such a node from the PoS terminal. If no other mode of payment transaction is allowed for the user for the requested purchase, the processing of the request can be handled at the communication node without delay. If the selection module is integrated into the handling unit, for example the EMV node, the database may still be separate to the handling unit. In this case the selection unit will be connected to the database for access to it. Features of the selection unit which refer to interfaces with units outside of the system in this case will preferably be provided at the database.

According to a preferred embodiment, the system has an interface for transmission of payment request to a credit card entity and an interface for transmission of payment to a bank entity. These interfaces may be combined in one interface. By providing communication or transmission facilities to both a bank and a credit card entity, payment transaction modes of different kinds can be handled by the inventive system.

The system according to the present invention is preferably designed for carrying out the inventive method.

Features and advantages which are described with respect to the inventive method - where applicable - also relate to the inventive system and vice versa.

The invention will now be described again with reference to the enclosed figures, wherein:
Figure 1 shows a schematic depiction of the units of one embodiment of the system according to the invention;
Figure 2 shows a schematic flowchart of one embodiment of the method according to the invention; and

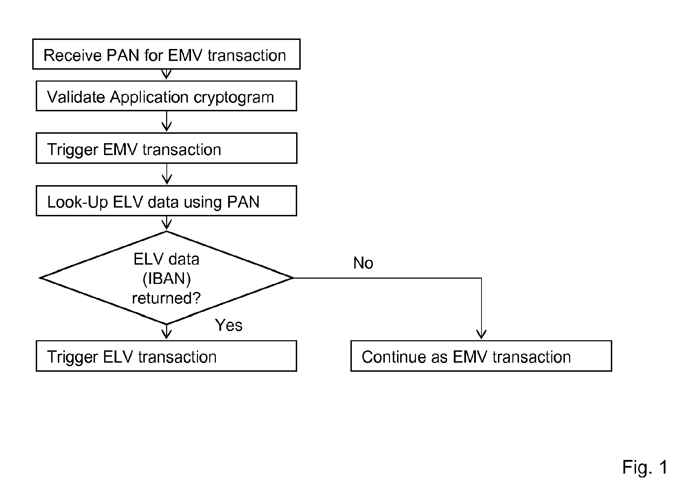

Figure 1 shows a schematic flowchart of a second embodiment of the method according to the invention;

The system 1 of the present invention in the embodiment shown in Figure 1 comprises payment cards 10, which are also referred to as cards. In Figure 1 only one card 10 is shown. The card 10 comprises a secure element 100. The system 1 further comprises Point of Sale (POS) terminals 11, where again in Figure 1 only one PoS terminal 11 is shown. The PoS terminal 11 is at least temporarily connected to or can communicate with a handling unit 12 which in the depicted embodiment is an EMV node 12. The handling unit 12 can communicate with a credit card entity 13, which may be a server of the credit card company, a bank entity 14 which may be a server of the bank, and with a selection module 15. In the embodiment shown in figure 1 the selection module 15 comprises a database 150. As indicated by the dashed box in Figure 1 the selection module 15 could also be included in handling unit 12 and only be connected for access to the database 150.

In one use case for the embodiment of the system 1 shown in Figure 1, the user, who can also be referred to as a customer, registers an authorization for electronic debit deduction ELV. The user registers this authorization, which preferably is a SEPA mandate with the selection unit 15 or in case where the selection unit is included in the handling unit 12 with a backend service which administrates the database 150. It should be noted that the selection unit 15 may be implemented or connected with other servers or units of a service providing electronic payment transfer. For example acquirers or mobile operators may operate the service. These service providers may be referred to as backend service providers. The authorization or mandate comprises an indication of the user's bank account as well as the authorized entity. This authorization is stored at the database 150 of the selection unit. The authorization is stored at the database 150 in connection with the name and identification and preferably with an identifier of the user, in particular a PAN of the user. The selection unit 15 has a user interface to allow the user to enter authorizations for different merchants or acquirers. In particular, mandates for direct debiting ELV may be entered into the database. Therein, the data which is necessary for carrying out the debiting of the bank account is stored. Preferably, at least the IBAN of the user and further preferably also the mandate numbers for the individual mandates are entered into the database. In addition, the user interface may be used to enter preferences of the user concerning the mode of transaction. In particular, the user may enter that any transaction over a certain amount should be handled via a first mode of transaction. Furthermore, attributes such as vouchers, coupons, loyalty card numbers and the like may be entered at the selection unit 15. These entries may be performed by the user or may be transmitted from a merchant or acquirer directly to the selection unit 15 or a service managing the database 150.

A merchant/acquirer initially not in scope of the user's mandate can also trigger a request to obtain a mandate for future transactions from the user through user interaction with the selection module or a backend service which handles the selection module and/or the database. The consumer can manage the scope of the mandate through a user interaction and subsequently manage any existing mandates.

On the payment card 10, in particular in the secure element 100, an identifier of the user for the mode of transaction for which the card 10 is intended to be used is stored. In particular, a primary account number PAN is stored on the secure element.

If the user wishes to conduct a purchase, he presents his card 10 with the secure element 100 to a PoS terminal 11. The data communication between the secure element 100 and the PoS terminal 11 may be wireless. Preferably, the data communication is carried out via NFC connection. With the algorithms prescribed by the NFC protocol, the transmission of data from the secure element 100 to the PoS terminal 11 is encrypted and can thus cannot be read or used by third parties. In addition or optionally, the identifier, in particular a PAN, will be validated with an application cryptogram. The PoS terminal 11 will receive the identifier, which may be a PAN number, for example a Visa PAN (VPAY PAN). With additional information on the purchase such as the amount to be debited, the PoS terminal 11 generates a payment transaction request. The payment transaction request is transmitted to a handling unit 12, which the PoS terminal 11 selects based on the PAN number. In the depicted use case, the PAN number indicates an EMV transaction to be carried out, so the PoS terminal 11 will transmit the payment transaction request to an EMV node 12.

At the EMV node or handling unit 12, at least the identifier which had been received from the secure element 100 and an indication of the PoS terminal, in particular an indication that allows determination of the merchant or acquirer is read or extracted from the payment transaction request. This indication from the PoS terminal may be an acquirer ID (AID) or a merchant ID (MID). With this information, the EMV node 12 initiates a look-up routine at the selection unit 15. In particular, the selection unit 15 upon receipt of the identifier, for example the PAN, and indication of the PoS terminal, for example AID/MID, will check the database 150 for entries for the respective identifier. If an entry for the identifier is found in the database 150, it is further checked whether an authorization is stored for this identifier. In that case, it is further checked or filtered whether the authorization registered in the database 150 is an authorization for the merchant or acquirer for whom the indication had been extracted at the handling unit 12. If an authorization or mandate for the merchant or acquirer is registered for the identifier, the authorization details, in particular the IBAN number and possibly the mandate number will be read from the database 150 and will be transmitted to the handling unit 12. The authorization details may thus also be referred to as banking data. Together with the authorization details, in particular the IBAN number additional and possibly the mandate number, attributes may be transmitted to the handling unit 12. Such additional attributes may be user preferences which are contained in the database 150 for the respective user. The user preferences may for example be the priority of modes of transaction or an amount preset for making the selection of mode of transaction. Further attributes may be loyalty card number, voucher, coupons which are stored in the database with respect to the user for the merchant or acquirer.

With this information, a payment transaction request for the mode of transaction defined by the bank information and/or attributes revealed from the database 150 may be generated at the handling unit 12. In particular an ELV request may be generated and transmitted to the respective bank 15. If the priorities set by the user indicate that an EMV transaction is to be carried out, the EMV node 12 may instead transmit the transaction request originally received from the PoS terminal 11. If attributes such as a voucher have been received, the EMV node 12 may alter the transaction request originally received, by adjusting the amount to be deducted.

In the use case described with respect to Figure 1, the actual selection of which mode of payment is to be conducted may be performed at the selection unit 15 or may be performed at the handling unit 12 based on information received from the selection unit 15 or the respective database 150.

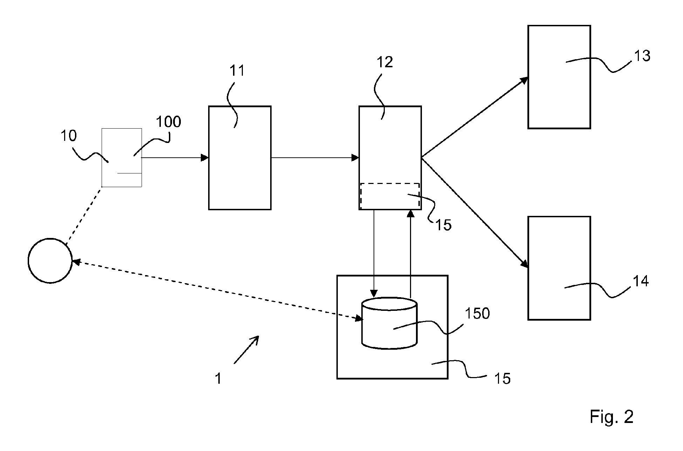

In Figure 2 a general flow chart of the main steps of the method according to one embodiment of the invention is shown.

In a first step an identifier, which preferably is a PAN, and in the depicted embodiment indicates that an EMV transaction is to be carried out, is received at the PoS terminal. The PAN is preferably transmitted wirelessly to the PoS. Therefore after receiving the PAN and an application cryptogram from the secure element, the PoS terminal will perform a validation of the application cryptogram to check the authenticity of the payment card.

Upon receipt of the PAN and validation of the application cryptogram, an EMV transaction is triggered by the PoS terminal, towards an EMV node. During the EMV transaction a look-up for transaction data, in particular ELV data is performed in a database. In this look-up the PAN as well as an indication of the merchant/acquirer, in particular an MID or AID is used. If the database returns ELV data, in particular the IBAN of the user and possibly also further data such as the mandate number for the merchant / acquirer, an ELV transaction is triggered. This means that the EMV transaction which was originally initiated is changed into an ELV transaction and a respective request is transmitted to the bank of the user. If on the other hand, no ELV data is returned for the user from the database, the EMV transaction which was originally initiated is continued and a respective request is transmitted to a credit card entity.

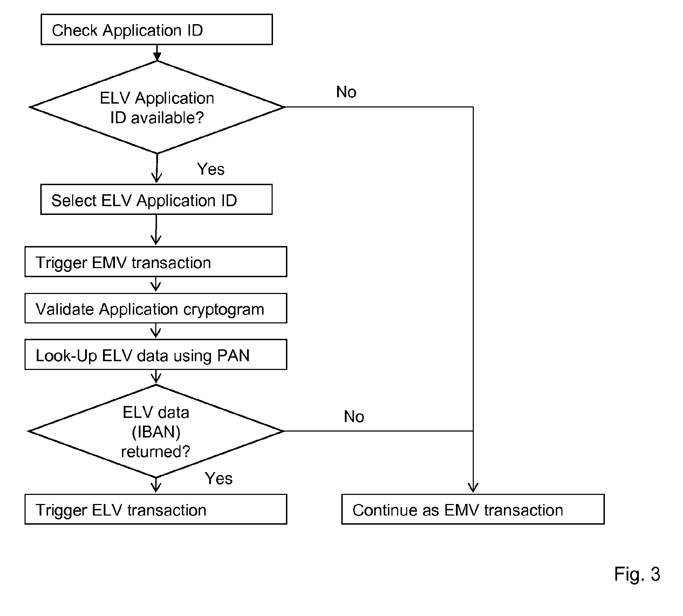

In Figure 3 the main steps of an alternative embodiment of the method according to the invention is shown.

In this embodiment, the payment card 10 is presented to the PoS terminal 11. The PoS terminal 11 is presented any available ID for modes of transaction applications in the Proximity Payment System Environment (PPSE). If no ELV AID is present, the PoS terminal will select the EMV AID and an EMV transaction will be carried out. If on the other hand an ELV AID is present, the PoS terminal may select the ELV as mode of transaction but will trigger an EMV transaction. In addition, the PoS terminal validates the application cryptogram to check the authenticity of the secure element or the card. As the EMV transaction will have the application ID of the ELV transaction as selected by the PoS terminal, the handling unit in particular the EMV node will use the PAN to perform a look-up of the ELV data and trigger an ELV transaction when an IBAN and potentially further banking data such as the mandate number is returned but will continue as EMV transaction otherwise, that means if no banking data is returned.

With the present invention it becomes possible to credit card provisioned on the SIM to enable contactless payments by ELV transactions.

With the present invention any EMV (Visa, Mastercard...) transaction can be used, to look up if a user is enabled, in particular registered for an ELV transaction. If the user is enabled present invention will provide verified (mandate) ELV data (IBAN, BIC,..) to the acquirer/merchant enabling an ELV transaction. If not the transaction is continued as a normal EMV transaction.

### Reference numbers

- 1: System
- 10: Payment card
- 100: Secure element
- 11: Point of Sale (PoS) terminal
- 12: Handling unit (EMV node)
- 13: Credit card entity
- 14: Banking entity
- 15: Selection module
- 150: Database

## Claims

1. Method of carrying out payment transaction with a payment card (10) including a secure element (100), the method comprising the steps of:
- initiating the payment transaction process via a data connection between the secure element (100) and a Point of Sale (PoS) terminal (11) by transmitting at least one identifier (PAN) for a first mode of payment transaction for the user to the Point of Sale (PoS) terminal (11);
- selecting a mode of payment transaction from at least two payment transaction modes by using the at least one identifier (PAN) received from the secure element (100), wherein one transaction mode is the first transaction mode for which the identifier (PAN) is stored at the secure element (100) and at least one transaction mode is a second transaction mode different from the mode for which the identifier is stored at the secure element (100); and
- directing the payment transaction request to one of at least two financial entities (14, 15) for finalizing the payment transaction based on the selected mode of payment transaction.

2. Method according to claim 1, **characterized in that** the selection of the transaction mode includes a look-up process for information stored in a database (150) with respect to at least part of the identifier (PAN) after the identifier (PAN) has been received at the Point of Sale (PoS) terminal (11).

3. Method according to claim 2, **characterized in that** in the look-up process also an indication of the Point of Sale (PoS) terminal (11) is included.

4. Method according to anyone of claims 1 to 3, **characterized in that** the selection of the payment transaction mode is carried out at the Point of Sale (PoS) terminal (11) or at a handling entity connected to the Point of Sale (PoS) terminal (11).

5. Method according to anyone of claims 1 to 4, **characterized in that** the user provides confirmation on at least the second mode of payment transaction before the data connection between the Point of Sale (PoS) terminal (11) and the secure element (100) is initiated.

6. Method according to anyone of claims 1 to 5, **characterized in that** the first mode of payment transaction is a transaction according to the Europay, MasterCard and VISA (EMV) standard and the second mode of payment transaction is an electronic debiting transaction (ELV) according to the Single Euro Payments Area (SEPA) standard.

7. Method according to anyone of claims 1 to 6, **characterized in that** the method comprises the steps of:
- receiving a primary account number (PAN) for a first mode of payment transaction at the Point of Sale (PoS) terminal (11) as an identifier;
- triggering the payment transaction in the first mode towards a handling unit (12);
- looking-up transaction data for a second payment transaction mode by the handling unit (12) in a data base (150);
- in case of presence of the transaction data for the second mode in the database (150) triggering a payment transaction according to the second payment transaction mode and aborting the payment transaction according to the first payment transaction mode; and;
in case of absence of the transaction data in the database (150), continuing the payment transaction according to the first mode of payment transaction.

8. System for carrying out payment transaction with a payment card (10) including a secure element (100), comprising at least one Point of Sale (PoS) terminal (11) and at least one handling unit (12) for handling a payment transaction in a first mode of payment transaction, **characterized in that** the system (1) further comprises a selection module (15) for selecting a mode of payment transaction from the first mode of payment transaction and at least one second mode of payment transaction, which is different to the first mode, and **in that** the selection module (15) is associated to the handling unit (12) of the system (1) at which a request for carrying out a payment transaction in one mode is received.

9. System according to claim 8, **characterized in that** the selection module (15) has an interface for at least receiving information from outside of the system (1) and an interface for receiving information from at least one other unit (12) of the system (1).

10. System according claim 8 or 9, **characterized in that** the system (1) has an interface for transmission of payment request to a credit card entity (13) and an interface for transmission of payment to a bank entity (14).

11. System according to anyone of claims 8 through 10, **characterized in that** the system is designed for carrying out a method according to anyone of claims 1 to 7.
